Europäisches Patentamt

European Patent Office

Office européen des brevets

(19)

(11) **EP 0 574 773 B1**

(12) **FASCICULE DE BREVET EUROPEEN**

(45) Date de publication et mention
de la délivrance du brevet:
**08.01.1997 Bulletin 1997/02**

(51) Int Cl.6: **G01M 3/26**, G01M 3/28

(21) Numéro de dépôt: **93108992.4**

(22) Date de dépôt: **04.06.1993**

(54) **Procédé et dispositif pour déterminer quantitativement le degré d'étanchéité d'un assemblage de palplanches**

Verfahren und Vorrichtung für die quantitative Bestimmung der Dichtigkeit eines Spundbohlenaufbaus

Procedure and device for the quantitative determination of the tightness of a sheet pile assembly

(84) Etats contractants désignés:
**BE CH DE DK ES FR IT LI NL SE**

(30) Priorité: **17.06.1992 LU 88134**
**05.05.1993 LU 88254**

(43) Date de publication de la demande:
**22.12.1993 Bulletin 1993/51**

(73) Titulaire: **ARBED S.A.**
**L-2930 Luxembourg (LU)**

(72) Inventeur: **Decker, Jean**
**L-3673 Kayl (LU)**

(74) Mandataire: **Freylinger, Ernest T.**
**Office de Brevets**
**Ernest T. Freylinger**
**321, route d'Arlon**
**Boîte Postale 48**
**8001 Strassen (LU)**

(56) Documents cités:
**US-A- 3 913 382**

## Description

La présente invention concerne un procédé et un dispositif pour déterminer quantitativement le degré d'étanchéité d'un assemblage de palplanches.

Les palplanches sont des poutrelles métalliques, ayant des sections transversales plus ou moins complexes (par exemple en Z, en U, des sections droites ou en caisson), qui sont assemblées pour constituer des parois continues. Des assemblages de palplanches sont utilisés plus spécialement lors de travaux de fouilles, de constructions de barrages, de bassins de retenue d'eau etc., pour retenir le sol et dans un certain degré aussi l'eau.

Sur les chantiers les palplanches, qui sont le plus souvent assemblées deux à deux par des treuils dans les ateliers, sont enfoncées dans le sol par battage, par vibration, ou par des presses pour former une paroi métallique composée de palplanches qui s'enclenchent mutuellement par leurs griffes. Un certain jeu au niveau des griffes doit permettre un enclenchement sans problèmes des palplanches lors de leur assemblage. Ce jeu constitue naturellement une source de fuite pour l'eau que l'assemblage des palplanches est censé retenir. Si une meilleure étanchéité de l'assemblage est requise, on introduit au niveau des griffes des matériaux plastiques, ou élastiques ou hydrogonflables qui sont censés obturer plastiquement resp. élastiquement ledit joint. Ces matériaux d'étanchement permettent, en fonction de leur qualité et de leur mise en oeuvre, de réduire plus ou moins les fuites d'eau entre les griffes.

Le degré d'étanchéité d'un assemblage de palplanches dépend de nombreux facteurs, dont par exemple de la forme des griffes, des tolérances de fabrication, du type du joint ou de la masse d'étanchéification utilisée, du procédé de la mise en oeuvre de la palplanche du procédé de mise en place du joint ou de la masse d'étanchement. Jusqu'à présent il n'était pas possible de déterminer par des moyens simples quantitativement un degré d'étanchéité d'un assemblage de palplanches. Or, la détermination quantitative du degré d'étanchéité est d'un intérêt certain, aussi bien dans l'atelier que sur le chantier. En effet, le producteur de palplanches, qui désire optimiser, contrôler et certifier l'efficacité des mesures d'étanchéité prises au niveau des griffes et qui désire fournir des données contrôlables à l'utilisateur en ce qui concerne les fuites d'eau prévisibles d'un assemblage, doit pouvoir quantifier et comparer le degré d'étanchéité d'assemblages de palplanches aussi bien dans l'atelier que sur le chantier. L'entrepreneur de travaux publics et le maître de l'ouvrage doivent pouvoir de leur côté contrôler sur le chantier que l'assemblage de palplanches réalise effectivement l'étanchéité requise dans le cahier de charge. L'ingénieur doit enfin pouvoir disposer de données de base fiables pour le calcul des quantités d'eau qui traversent par unité de temps un assemblage de palplanches soumis à une pression hydrostatique.

Le but de la présente invention est de fournir un procédé pour déterminer quantitativement, d'une façon simple et parfaitement reproductible, le degré d'étanchéité d'un assemblage de palplanches, aussi bien sur le chantier que dans l'atelier.

Cet objectif est atteint par un procédé pour déterminer quantitativement le degré d'étanchéité d'un assemblage de palplanches qui comprend au moins un joint longitudinal formé par une griffe solidaire d'une première palplanche qui s'enclenche avec une griffe solidaire d'une deuxième palplanche, caractérisé en ce que d'un côté de l'assemblage on délimite longitudinalement au-dessus du joint une chambre étanche d'une longueur L, en ce que l'on alimente cette chambre avec un liquide, en ce que l'on maintient la pression d'alimentation de ce liquide constante, égale à au moins une pression déterminée p pendant un intervalle de temps t, et en ce que l'on mesure la quantité d'eau Q alimentant ladite chambre pendant cet intervalle de temps t.

La présente invention fournit aussi un dispositif pour la mise en oeuvre de ce procédé qui est caractérisé par un corps oblong muni d'une première et d'une deuxième surface d'appui qui sont déformables élastiquement et s'étendent parallèlement en direction longitudinale dudit corps oblong, par des moyens de fixation arrangés de façon à presser ledit corps oblong situé à cheval au-dessus dudit joint longitudinal sur les deux palplanches, ledit corps oblong définissant, au-dessus de ce joint, au moins une chambre de mesure d'une longueur L, la première surface d'appui réalisant l'étanchéité longitudinale entre la première palplanche et le corps oblong et la deuxième surface d'appui réalisant l'étanchéité longitudinale entre la deuxième palplanche et le corps oblong, par des moyens d'étanchement axial de ladite chambre au niveau des deux extrémités du corps oblong, par des moyens d'alimentation de ladite chambre avec un liquide à une pression déterminée, et par des moyens de mesure de la quantité d'eau d'alimentation pendant un intervalle de temps t.

Selon la présente invention on définit longitudinalement au-dessus du joint une chambre étanche d'une longueur L, qu'on alimente avec un liquide sous pression. Les seules sources de fuite de cette chambre peuvent se situer au niveau du joint, plus précisément le long du segment de longueur L de ce joint compris dans la chambre étanche. En mesurant en conséquence la quantité d'eau Q injectée à pression constante dans la chambre pendant un intervalle de temps t, on peut directement déduire de cette mesure le débit linéique de fuite q du joint par la formule:

$$q = \frac{Q}{(L.t)}$$

Ce débit linéique de fuite est exprimé par exemple en litres/(min.m) en précisant que la mesure a été effectuée à la pression d'alimentation p. Normalement, on prend p = 0,5 bar, ce qui correspond à une pression hydrostatique de 5 m de colonne d'eau, c'est-à-dire à la pression hydrostatique à laquelle les palplanches sont normalement exposées. Sur le chantier le temps d'observation est par exemple de 2 heures. Bien entendu on peut aussi travailler avec des valeurs plus élevées de la pression p et des temps d'observation plus longs. Ceci est notamment à recommander lorsqu'on a introduit dans le joint entre les griffes un matériau d'étanchement déformable plastiquement. En effet si, dans ce matériau déformable plastiquement, il apparaît une fuite locale, c'est-à-dire s'il se forme un passage dans le matériau déformable plastiquement, ce dernier ne se fermera que difficilement de lui-même. Il faut en conséquence vérifier pour un tel joint plastique s'il existe une tendance à former des passages localisés de liquide.

A cette fin on adopte de préférence un cycle de mesure dans lequel on soumet le joint successivement à des pressions croissantes $P_1$, $P_2$, $P_3$, ... pendant des intervalles de temps $t_1$, $t_2$, $t_3$, ... et que l'on mesure les quantités d'eau $Q_1$, $Q_2$, $Q_3$, ... alimentant la chambre pendant les instants $t_1$, $t_2$, $t_3$ ... .

Un tel cycle peut par exemple être le suivant:

0,5 bar pendant 2 heures
1,0 bar pendant 2 heures
1,5 bar pendant 2 heures
2,0 bar pendant 2 heures
2,5 bar pendant 2 heures
3,0 bar pendant 2 heures.

Il sera entre autres apprécié que les palplanches doivent être accessibles seulement d'un côté pour l'application du procédé selon l'invention. Il est même envisageable de faire des mesures sous l'eau. En travaillant à des pressions plus élevées que la pression hydrostatique à l'endroit de mesure.

Le dispositif selon l'invention est d'utilisation facile, tout en permettant des mesures fiables dans l'atelier et sur le chantier.

La chambre étanche est obtenue en pressant par des moyens de fixation adéquats un corps oblong situé à cheval au-dessus dudit joint longitudinal sur les deux palplanches. L'étanchéité entre le corps oblong et la première et la deuxième palplanche est réalisée à l'aide de surfaces d'appui déformables élastiquement qui s'étendent parallèlement en direction longitudinale du corps oblong. L'étanchéité axiale aux extrémités du corps oblong est obtenue par des moyens séparés, par exemple par injection d'une masse d'obturation. On utilise préférentiellement une masse d'injection hydrogonflable qui augmente le volume sous l'influence de l'humidité.

Comme moyen de fixation dudit corps oblong on peut utiliser tout dispositif qui permet de presser fermement ledit corps oblong contre les deux palplanches. L'équipement est complété selon l'invention, par des moyens pour alimenter la chambre en un liquide à une pression déterminée et par des moyens pour mesurer la quantité de liquide alimentant la chambre étanche pendant un intervalle de temps t. Ces moyens d'alimentation et de mesure sont en principe connus en soi, et leur mise en oeuvre ne cause guère de problème, même sur le chantier.

Selon une exécution préférentielle ledit corps oblong se compose d'un corps en matériau élastomère, qui est fixé sur un support métallique et qui est muni d'au moins une gorge longitudinale s'étendant sur une longueur L entre les deux surfaces d'appui longitudinales. Ces dernières font donc partie intégrante du corps en matériau élastomère.

Cette exécution a l'avantage d'être de réalisation particulièrement simple. De plus elle garantit un ajustement parfait entre ledit corps oblong et les deux palplanches, sur lesquelles il est pressé à cheval au-dessus du joint longitudinal entre les griffes. La gorge dans le corps élastomère garantit la continuité longitudinale de la chambre sur une longueur L au-dessus du joint, même lorsque le corps longitudinal est fermement pressé contre les deux palplanches. Le support métallique confère la rigidité longitudinale et transforme les forces locales exercées par les moyens de fixation en une pression de contact, qui est quasi uniforme le long des deux surfaces d'appui longitudinales.

Le corps en matériau élastomère est préférentiellement collé avec une surface opposée aux deux surfaces d'appui sur la face extérieure de l'âme d'un profilé métallique qui a une section en "U".

Afin d'assurer une distribution uniforme du liquide dans ladite gorge, un tuyau de distribution axiale du liquide sous pression est logé dans la gorge. Ce tuyau est avantageusement muni de perforations le long d'une génératrice qui est orientée vers ledit joint longitudinal.

Lesdits moyens de fixation comprennent avantageusement des étançons à longueur réglable, s'appuyant avec une extrémité sur une structure de support et avec l'autre extrémité sur le corps oblong.

Dans une première exécution cette structure de support comprend des étriers qui sont fixés, par exemple par soudage, à cheval sur les deux palplanches. Une deuxième exécution de cette structure de support est applicable aux palplanches à section en "U" ou aux assemblages des palplanches à section en "Z" dont deux palplanches successives forment une section en "U". Cette exécution est caractérisée par des pointes trempées qui permettent d'encastrer la structure de support de façon démontable entre deux surfaces opposées de ladite section en "U".

Selon un autre mode de réalisation préféré, spécialement adaptée aux mesures de débits de fuites relativement faibles, le corps en matériau élastomère est collé, avec une surface opposée aux deux surfaces d'appui, sur une semelle centrale qui est reliée à un ou plusieurs moyens de fixation. Ces moyens de fixation comprennent une vis de compression principale reliée par une extrémité à la semelle centrale. La semelle centrale est reliée aux deux vis de compression secondaires moyennant un profil en forme de T. L'autre extrémité des vis de compression est reliée à un étrier fixé sur les palplanches. Une pression peut alors être exercée sur le corps en matériau élastomère en tendant la vis de compression principale et/ou en tendant les deux vis de compression secondaires. La pression exercée sur le corps en matériau élastomère par les deux vis de compression secondaire n'est pas seulement transmise via la semelle centrale sur la partie centrale du corps élastomère mais aussi via les deux semelles latérales sur les bords longitudinaux du corps en matériau élastomère. Cette façon de procéder permet d'exercer une forte pression sur le corps élastomère, tout en assurant que les bords dudit corps restent en contact avec les palplanches.

Les exécutions préférentielles de la présente invention seront décrites à titre d'illustration en se référant aux dessins ci-joints, dont :

- la Figure 1 représente un schéma d'ensemble du dispositif pour déterminer quantitativement le degré d'étanchéité d'un assemblage de palplanches ;
- la Figure 2 représente une coupe transversale à travers le corps de mise sous pression du joint, lorsque ce dernier est en place sur le joint ;
- la Figure 3 représente une coupe transversale à travers un autre mode de réalisation d'un corps de mise sous pression du joint lorsque ce dernier est en place sur le joint ;
- la Figure 4 représente une coupe transversale à travers deux palplanches en "U" qui sont munies d'une structure de support démontable pour le corps de mise sous pression du joint ;
- la Figure 5 montre un schéma d'ensemble selon un autre mode de réalisation avantageux du dispositif ;
- la Figure 6 représente une coupe longitudinale à travers le corps de mise sous pression du joint.

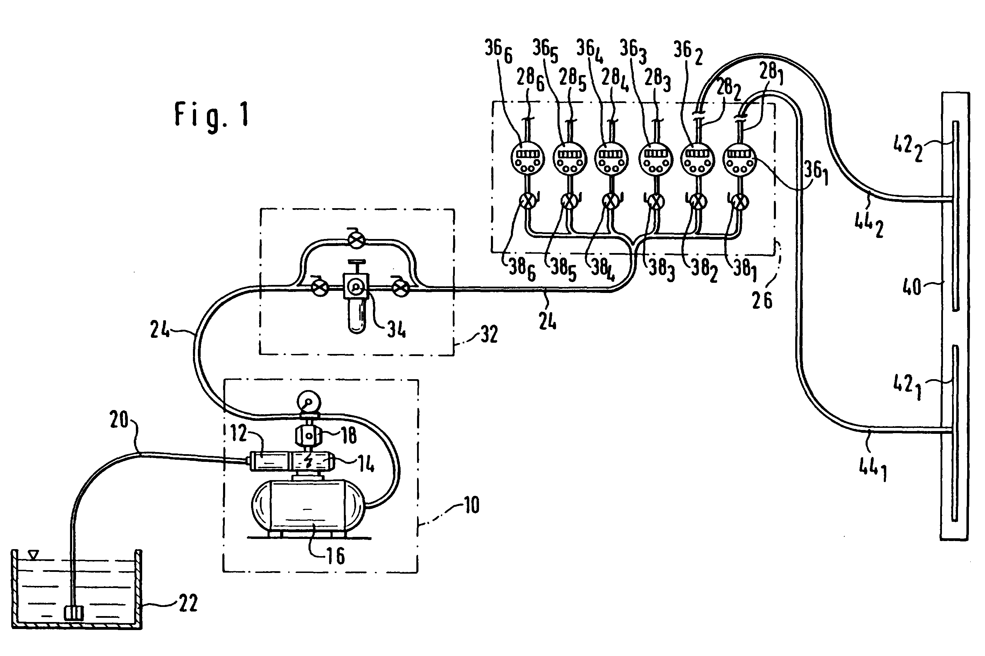

La Figure 1 représente un schéma d'ensemble d'un dispositif qui sert à déterminer quantitativement le degré d'étanchéité d'un assemblage de palplanches.

On voit un groupe de mise en pression d'eau 10, qui comporte une pompe 12 munie d'un moteur d'entraînement 14, un réservoir de mise sous pression 16, un pressostat 18 pour l'enclenchement de la pompe 12. Ce groupe de mise sous pression 10 peut être acheté dans le commerce comme unité assemblée, soit avec un moteur électrique, soit avec un moteur à combustion. L'utilisation d'un moteur à combustion est particulièrement intéressante sur un chantier.

Le groupe de mise sous pression 10 est relié par une conduite d'aspiration 20 à un bac à eau 22. Il est cependant aussi envisageable de relier directement le groupe de mise sous pression 10 à une conduite de distribution d'eau. Une conduite de refoulement 24 relie le groupe de mise sous pression 10 à un répartiteur 26 muni de plusieurs départs $28_1$, $28_2$, $28_3$, ... pour des circuits de mesure. Dans cette conduite de refoulement 24 est installé un régulateur de pression 32, qui réduit la pression fournie par le groupe de mise sous pression 10 à une valeur déterminée. Cette valeur peut être lue sur un manomètre 34. Si on dispose cependant d'une conduite de distribution d'eau qui a une pression d'alimentation suffisante, il est cependant aussi envisageable de raccorder le régulateur de pression 32 directement à ladite conduite de distribution d'eau. Pour chaque départ $28_1$, $28_2$, $28_3$, ... le répartiteur 26 comporte un compteur d'eau classique $36_1$, $36_2$, $36_3$, ..., qui est par exemple du type où l'écoulement de l'eau fait tourner une turbine qui entraîne via des roues dentées des aiguilles indiquant la consommation en eau en l ou en $m^3$. A chaque compteur $36_1$, $36_2$, $36_3$, ... est associé un robinet d'isolement $38_1$, $38_2$, $38_3$, ... qui permet d'isoler des circuits de départ ($28_3$ - $28_6$) du répartiteur qui ne sont pas raccordés à un corps de mise sous pression 40 d'un joint.

Sur la Figure 1, la référence 40 repère une représentation schématique d'un tel corps de mise en pression. Dans ce cas précis ledit corps 40 comporte deux secteurs de mesure $42_1$, $42_2$ qui sont raccordés respectivement à un premier compteur d'eau $36_1$ par une première conduite $44_1$, et à un deuxième compteur d'eau $36_2$ par une deuxième conduite $44_2$.

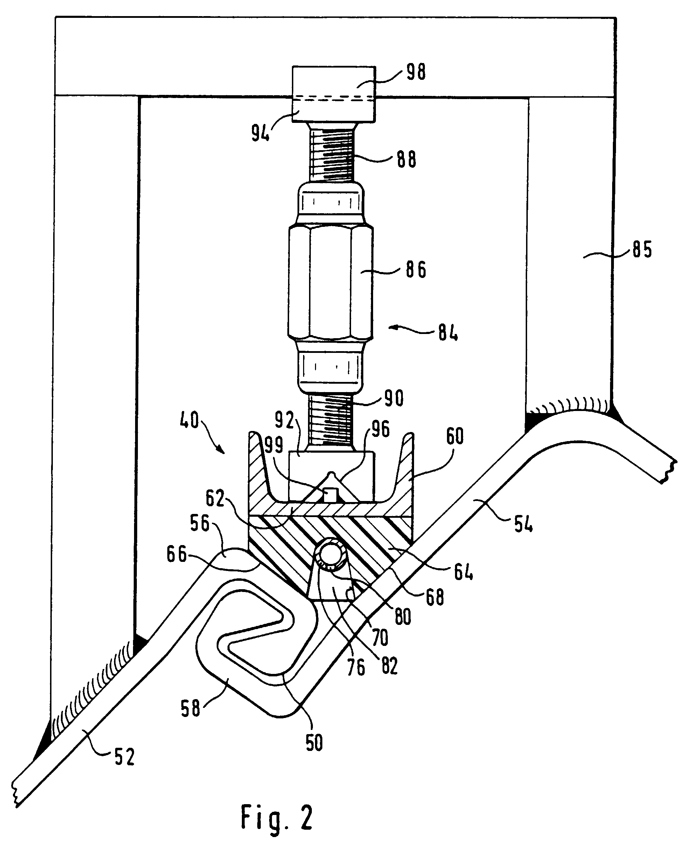

Ce corps 40 de mise sous pression d'un joint et son montage sur des palplanches sera étudié à l'aide des figures 2, 3 et 4.

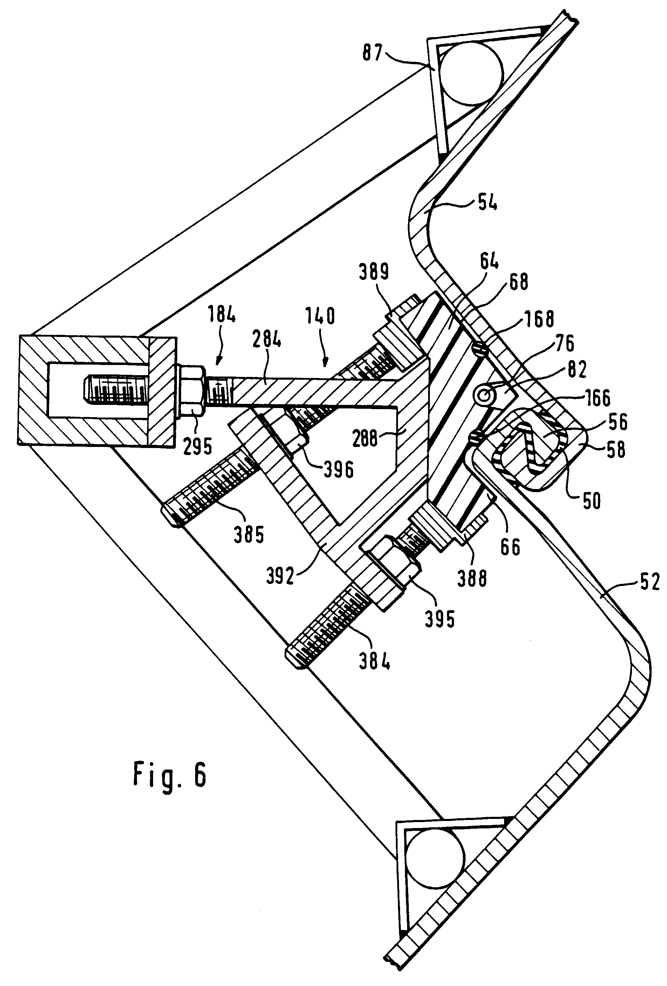

Les Figures 2 et 6 représentent une coupe transversale effectuée au niveau d'un joint 50 entre deux palplanches 52, 54. Ce joint 50 est formé par une griffe 56 solidaire de la première palplanche 52 qui s'enclenche avec une griffe 58 solidaire de la deuxième palplanche 54. On voit le corps 40, respectivement 140, de mise en pression du joint en coupe transversale en appui sur les deux palplanches 52 et 54.

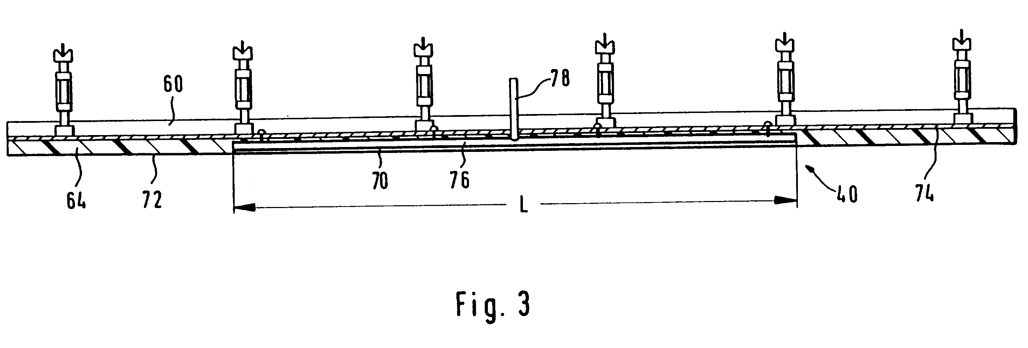

La Figure 3 montre une coupe longitudinale à travers le corps 40 de mise en pression du joint de la Figure 2, cette fois-ci sans les palplanches. Sur cette figure on voit qu'il s'agit d'un corps oblong, qui a sensiblement la forme d'une barre prismatique. Il comporte un profilé métallique 60 ayant une section en "U", sur la face extérieure de l'âme 62 duquel est fixé, par exemple par collage, un corps élastomère 64. Ce corps élastomère qui s'étend sur toute la longueur du profilé 60, a une section transversale rectangulaire. Les arêtes longitudinales libres sont cependant chanfreinées pour former deux surfaces d'appui 66 et 68. Entre ces deux surfaces d'appui 66, 68 le corps élastomère 64 est muni d'une gorge 70 sur une longueur L. Cette gorge 70 est centrée par rapport à la longueur totale dudit corps élastomère 64, c'est-à-dire qu'il subsiste à chaque extrémité du corps élastomère un secteur 72, 74 dépourvu de gorge (voir Figure 3).

L'homme de l'art comprendra facilement que la forme dudit corps élastomère devra naturellement être adaptée à la forme des griffes respectivement à la section des palplanches. Il s'ensuit que ledit corps élastomère ne devra pas nécessairement avoir une section telle que décrite ci-avant à titre d'exemple uniquement.

Dans cette gorge 70 est de préférence logé un tube 76 de distribution axiale de l'eau. Ce tube 76 est muni en son milieu d'un manchon de raccord 78 sur lequel est raccordé un tuyau de distribution 44$_i$. Le but de ce tube 76 est d'équilibrer axialement la distribution de l'eau dans la gorge 70. A cette fin le tube est muni de perforations 80 le long d'une génératrice.

La Figure 2 montre comment ce corps 40 de mise en pression du joint est monté sur les deux palplanches pour définir une chambre étanche 82 au-dessus d'une longueur L du joint. La première surface d'appui 66 prend appui sur la première palplanche 52 en longeant parallèlement ledit joint 50. La deuxième surface d'appui 68, prend appui sur la deuxième palplanche 54 en longeant parallèlement ledit joint 50. Le corps élastomère 64 est en conséquence situé à cheval au-dessus dudit joint 50.

Plusieurs étançons 84 à longueur ajustable pressent ledit corps élastomère 64 fermement contre les deux palplanches 52, 54, de façon que les surfaces d'appui 66, 68 du corps élastomère 64 réalisent une étanchéité longitudinale entre ce dernier et les deux palplanches 52, 54. A cette fin les étançons 84 s'appuient avec une extrémité sur des étriers 85 qui sont soudés à cheval sur la première palplanche 52 et la deuxième palplanche 54, et avec l'autre extrémité sur le profilé en "U" 60 entre les deux semelles de ce dernier. Il s'est montré qu'en pratique il suffit le plus souvent de prévoir trois de ces étançons 84 par mètre courant du corps 40 de mise sous pression du joint. Ces étançons 84 à longueur ajustable comprennent de préférence un écrou tendeur 86 dans la première extrémité duquel est vissée une tige filetée 88 munie d'un filet droit et dans la deuxième extrémité duquel est vissée une tige filetée 90 munie d'un filet gauche. Les extrémités libres de ces tiges filetées sont munies de têtes 92, 94 comprenant chacune une surface d'appui dans laquelle est effectuée perpendiculairement à l'axe de l'étançon une gorge 96, 98 qui coopère avec l'étrier 85, respectivement avec une pièce 99 soudée longitudinalement sur le profilé en "U", pour éviter une rotation ou un glissement latéral de ces têtes 92, 94 lorsqu'on tourne l'écrou tendeur 86 pour presser le corps 40 de mise en pression du joint fermement contre les palplanches 52, 54. Avant application dudit corps 40 sur le joint, il convient bien entendu de nettoyer les deux palplanches 52, 54 aux endroits de contact avec les deux surfaces d'appui 66, 68 du corps élastomère.

L'étanchéité latérale entre ledit corps 40 de mise en pression du joint et les deux palplanches 52, 54 est donc garantie en pressant les deux surfaces d'appui 66, 68 du corps élastomère fermement contre les deux palplanches. Il sera noté que l'écrou tendeur 86 est de préférence serré à l'aide d'une clé dynamométrique, de façon à pouvoir contrôler la pression de contact entre les surfaces d'appui 66, 68 et les palplanches 52, 54.

Au niveau des deux sections d'extrémité 72, 74 du corps élastomère 64 le problème d'étanchéité axiale est résolu en injectant une masse d'obturation dans le joint 50 entre les deux griffes 56, 58. Afin de faciliter l'obturation du joint 50 sur toute sa section, il peut être utile de forer un ou plusieurs trous dans la première griffe 56, respectivement de pratiquer une saignée transversale dans celle-ci (non montrée). La masse d'obturation utilisée est avantageusement une masse hydrogonflable, c'est-à-dire dont le volume augmente sous l'effet de l'humidité.

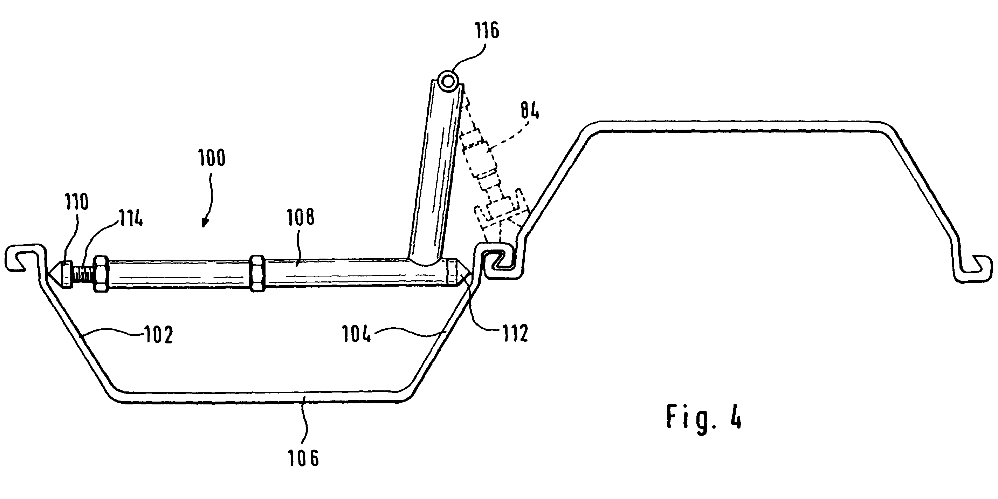

La Figure 4 montre une structure de support tubulaire sur laquelle les étançons 84 viennent s'appuyer. Cette structure de support tubulaire 100 est destinée à être encastrée entre deux surfaces opposées 102, 104 d'une palplanche 106 ayant une section en "U". Elle comporte plusieurs tubes 108 parallèles qui viennent s'encastrer comme les échelons d'une échelle, dans la section en "U" de la palplanche 106. A cette fin chacun de ces tubes 108 ou échelons parallèles est muni à ses deux extrémités d'une pointe 110, 112 en acier trempé. Au moins une de ces pointes 110 est chaque fois supportée axialement par une tige filetée 114 qui est vissée dans le tube 108. Lesdits échelons 108 supportent un tube 116 qui est à peu près parallèle au joint et qui se dresse à une certaine distance de celui-ci. Sur ce tube 116 viennent s'appuyer les étançons 84 avec une de leurs têtes 92, 94 pour presser le corps 40 de mise sous pression du joint contre les deux palplanches.

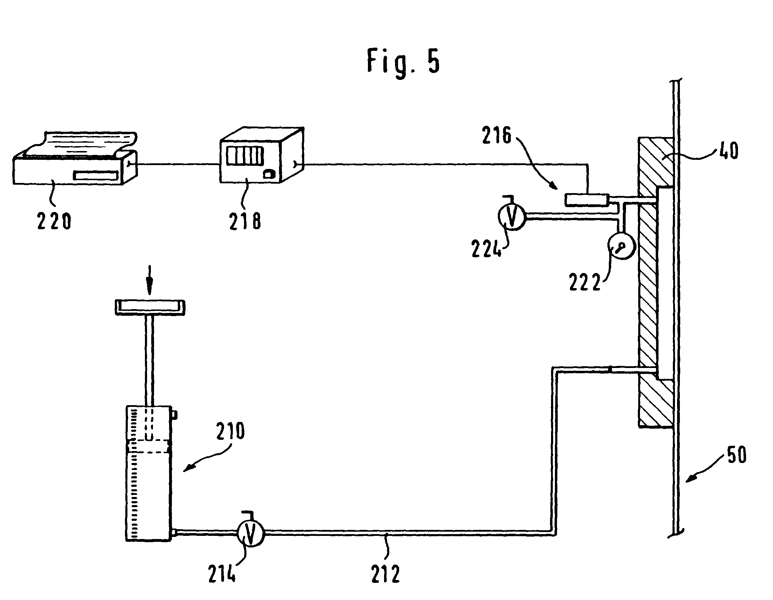

La Figure 5 montre un schéma d'ensemble d'un autre mode de réalisation avantageux du dispositif qui permet de mesurer de très faibles fuites à travers des joints d'un assemblage de palplanches.

Un piston calibré 210, qui permet des mesures de débit jusqu'à environ 0,1 cm$^3$/24 h, est rempli d'eau et une pression constante P est appliquée. Le piston 210 est relié à un corps 40 de mise sous pression situé à cheval sur un joint 50 moyennant un conduit 212. L'alimentation en eau du corps 40 peut être interrompue grâce à une vanne 214 placée dans le conduit 212. Le corps 40 est équipé d'un capteur de pression 216 qui est relié à un indicateur de pression 218 et à un enregistreur 220. L'indicateur de pression 218 et l'enregistreur 220 permettent une lecture directe respectivement un enregistrement, sous forme de diagramme, des chutes de pression résultant des fuites à travers le joint 40 d'une palplanche.

Le corps 40 peut aussi être équipé d'un manomètre 222 classique permettant la lecture analogue de la pression instantanée dans le corps 40. Le corps 40 est aussi équipé d'une vanne 224 qui permet de purger et de vidanger le système.

La Figure 6 montre un autre mode de réalisation préféré d'un corps 140 de mise sous pression. Cette exécution préférée est spécialement adaptée aux mesures de débits de fuites relativement faibles. La forme et l'étanchéité du corps élastomère 64 ainsi que le système de compression du corps élastomère contre les palplanches ont été adaptés pour satisfaire aux exigences plus sévères imposées par les faibles débits de fuites à mesurer.

Par rapport au dispositif de la Figure 2, on voit que les surfaces d'appui 66, 68 ont été agrandies. Des joints secondaires 166, 168 en caoutchouc ou similaire plus élastiques améliorent l'étanchéité entre les surfaces d'appui 66, 68 et les palplanches 52, 54.

Les étançons 84 du dispositif de la Figure 2 ont aussi été adaptés de façon à garantir qu'une pression exercée sur le corps élastomère 64 soit répartie uniformément sur les deux surfaces d'appui. Les étançons 84 de la Figure 2 ont été remplacés par un ou plusieurs systèmes de fixation 184 qui comprennent chacun une vis de compression principale 284 et deux vis de compression secondaires 384, 385. Les vis 284, 384, 385 s'appuient avec une extrémité sur des étriers 85 qui sont fixées sur les palplanches 52, 54 moyennant des fixations 87 solidaires des palplanches 52, 54. L'autre extrémité de la vis principale 284 forme une semelle 288 s'appuyant au corps élastomère 64. L'autre extrémité de la première vis de compression secondaire 384 et de la deuxième vis de compression secondaire forment chacune une semelle secondaire 388, 389 s'appuyant sur les bords longitudinaux du corps élastomère 64. La semelle 288 centrale relie les deux vis de compression principale 284 moyennant un profil 392 en forme de T. Les trois vis 284, 384, 385 comprennent une tige filetée et un écrou tendeur 295, 395, 396. En tendant les écrous tendeurs 295, 395, 396, le corps élastomère 64 est pressé fermement contre les deux palplanches 52, 54. Les trois vis 284, 384, 385 exercent ainsi une pression sur la semelle centrale 288 tandis que les deux vis secondaires 384, 385 exercent en plus une pression qui est répartie sur les bords longitudinaux du corps élastomère 64 par l'intermédiaire des semelles secondaires 388, 389. Il est important de noter que la semelle centrale 288 n'est pas directement reliée aux deux semelles 388, 389 latérales. On assure ainsi que les bords latéraux du corps élastomère 64 ne s'écartent pas des palplanches 52,54 lorsqu'une forte pression est exercée sur la semelle centrale. Il en résulte une meilleure étanchéité entre le corps élastomère 64 et les palplanches 52, 54.

Il sera apprécié que la présente invention décrit un procédé pour déterminer quantitativement, d'une façon simple et parfaitement reproductible, le degré d'étanchéité d'un assemblage de palplanches, aussi bien sur le chantier que dans l'atelier. Le dispositif pour la mise en oeuvre de ce procédé est d'utilisation simple et convient particulièrement aux rudes conditions auxquelles il est soumis sur le chantier.

## Revendications

1. Procédé pour déterminer quantitativement le degré d'étanchéité d'un assemblage de palplanches comprenant au moins un joint longitudinal (50) formée par une griffe (56) solidaire d'une première palplanche (52) qui s'enclenche avec une griffe (58) solidaire d'une deuxième palplanche (54), **caractérisé en ce que** d'un côté de l'assemblage on délimite longitudinalement au-dessus du joint (50) une chambre étanche (82) d'une longueur L, en ce que l'on alimente cette chambre (82) avec un liquide, en ce que l'on maintient la pression d'alimentation de ce liquide constante à au moins une pression déterminée p pendant un intervalle de temps t, en ce que l'on mesure la quantité de liquide Q alimentant ladite chambre (82) pendant cet intervalle de temps t.

2. Procédé selon la revendication 1, caractérisé en ce que l'on maintient la pression d'alimentation du liquide successivement constante à des pressions croissantes $p_1$, $p_2$, $p_3$, ... pendant des intervalles $t_1$, $t_2$, $t_3$, ... que l'on mesure les quantités de liquide $Q_1$, $Q_2$, $Q_3$, ... alimentant ladite chambre (82) pendant ces intervalles de temps $t_1$, $t_2$, $t_3$ ... .

3. Dispositif pour déterminer quantitativement le degré d'étanchéité d'un assemblage de palplanches comprenant au moins un joint longitudinal (50) formé par une griffe (56) solidaire d'une première palplanche (52) qui s'enclenche avec une griffe (58) solidaire d'une deuxième palplanche (54), **caractérisé par** un corps oblong (40) muni d'une première et d'une deuxième surface d'appui (66, 68) qui sont déformables élastiquement et s'étendent parallèlement en direction longitudinale dudit corps oblong (40), par des moyens de fixation (85, 86) arrangés de façon à presser ledit corps oblong (40) situé à cheval au-dessus dudit joint longitudinal (50) sur les deux palplanches (52, 54), ledit corps oblong (40) définissant au-dessus du joint (50) au moins une chambre de mesure (82) d'une longueur L, la première surface d'appui (66) réalisant l'étanchéité longitudinale entre la première palplanche (52) et le corps oblong (40) et la deuxième surface d'appui (68) réalisant l'étanchéité longitudinale entre la deuxième palplanche (54) et le corps oblong (40), par des moyens d'étanchement axial de ladite chambre (82) au niveau des deux extrémités (72, 74) du corps oblong (40), par des moyens d'alimentation (10, 32) de ladite chambre (82) avec un liquide à une pression déterminée, par des moyens de mesure ($36_i$) de la quantité de liquide d'alimentation pendant un intervalle de temps.

4. Dispositif selon la revendication 3, caractérisé en ce que ledit corps oblong (40) se compose d'un corps en matériau élastomère (64) fixé sur un support métallique (60) et en ce que le corps élastomère (64) est muni d'au moins une gorge longitudinale (70) s'étendant sur une longueur L entre les deux surfaces d'appui longitudinales (66, 68) qui font partie intégrante du corps en matériau élastomère (64).

5. Dispositif selon la revendication 4, caractérisé en ce que le corps en matériau élastomère (64) est collé sur un profilé métallique (60) qui a une section en "U".

6. Dispositif selon la revendication 4 caractérisé en ce que le corps en matériau élastomère (64) est fixé sur une semelle centrale (288) et sur deux semelles latérales (388, 389).

7. Dispositif selon la revendication 6 caractérisé en ce que la semelle centrale (288) est reliée à au moins une vis de compression principale (184) et en ce que les deux semelles latérales (388, 389) sont reliées chacune à au moins une vis de compression secondaire (395, 396).

8. Dispositif selon la revendication 7 caractérisé en ce que les deux vis de compression secondaires (395, 396) sont reliées a la semelle centrale (288) par l'intermédiaire d'un profil en T (372) solidaire de ladite semelle centrale (288).

9. Dispositif selon l'une quelconque des revendications 4 à 8, caractérisé en ce que dans la gorge (70) est logé un tube (76) de distribution axial dudit liquide sous pression.

10. Dispositif selon l'une quelconque des revendications 3 à 5, caractérisé en ce que les moyens de fixation comprennent des étriers (85) soudés à cheval sur les deux palplanches (52, 54) et des étançons (84) réglables en longueur s'appuyant avec une extrémité sur les étriers (85) et avec l'autre extrémité sur le corps oblong (40).

11. Dispositif selon l'une quelconque des revendications 3 à 10, caractérisé en ce que les moyens de fixation comprennent une structure de support (100) encastrée de façon démontable a l'aide de pointes trempées (110, 122) entre deux surfaces opposées (102, 104) d'une section en "U" de l'assemblage de palplanches, et des étançons (84) réglables en longueur s'appuyant avec une extrémité sur ladite structure de support (100) et avec l'autre extrémité sur le corps oblong (40).

12. Dispositif selon l'une quelconque des revendications 3 à 11, caractérisé en ce que les moyens d'étanchement axial sont constitués par une masse d'obturation injectée aux deux extrémités (72, 74) du corps oblong (40) dans la section transversale du joint (50) entre les deux griffes (56, 58).

13. Dispositif selon la revendication 12, caractérisé en ce que ladite masse d'injection est hydrogonflable.

## Patentansprüche

1. Verfahren zur quantitativen Bestimmung der Dichtigkeit eines Spundbohlenaufbaus mit mindestens einer Längsfuge (50), die von einer ersten Klaue (56) einer ersten Spundbohle (52) gebildet wird, welche in eine zweite Klaue (58) einer zweiten Spundbohle (54) eingerastet ist, dadurch gekennzeichnet, daß

   - auf einer Seite des Aufbaus in Längsrichtung über der Fuge (50) eine abgedichtete Kammer (82) der Länge L festgelegt wird,
   - diese Kammer (82) mit einer Flüssigkeit gespeist wird,
   - der Vordruck dieser Flüssigkeit bei mindestens einem bestimmten Druck p während eines Zeitabschnitts t konstant gehalten wird,
   - die Flüssigkeitsmenge Q, die die Kammer (82) während dieses Zeitabschnitts t speist, gemessen wird.

2. Verfahren gemäß Patentanspruch 1, dadurch gekennzeichnet, daß

   - der Vordruck der Flüssigkeit bei steigenden Drücken p1, p2, p3... während der Zeitabschnitte t1, t2, t3, ...jeweils konstant gehalten wird und daß
   - die Flüssigkeitsmengen Q1, Q2, Q3,... , die diese Kammer (82) in diesen Zeitabschnitten t1, t2, t3,.., speisen, gemessen werden.

3. Vorrichtung zur quantitativen Bestimmung der Dichtigkeit eines Spundbohlenaufbaus mit mindestens einer Längsfuge (50), die von einer ersten Klaue (56) einer ersten Spundbohle (52) gebildet wird, welche in eine zweite Klaue (58) einer zweiten Spundbohle (54) eingerastet ist, gekennzeichnet durch

   - einen länglichen Körper (40) mit einer elastisch verformbaren ersten und zweiten Stützfläche (66, 68), die sich parallel in Längsrichtung des länglichen Körpers erstrecken,
   - Befestigungsmittel (85, 86), die derart angeordnet sind, daß der längliche Körper (40), der quer über der Längsfuge (50) aufsitzt, auf die beiden Spundbohlen (52, 54) gepreßt wird, wobei der längliche Körper (40) oberhalb der Fuge (50) zumindest eine Meßkammer (82) der Länge L abgrenzt, wobei die erste Stützfläche (66) die Längsabdichtung zwischen der ersten Spundbohle (52) und dem länglichen Körper (40) bewirkt und die zweite Stützfläche (68) die Längsabdichtung zwischen der zweiten Spundbohle (54) und dem länglichen Körper (40) bewirkt,

13                    EP 0 574 773 B1                    14

- Mittel zur axialen Abdichtung der Kammer (82) an den beiden Enden (72, 74) des länglichen Körpers (40),
- Mittel zur Speisung (10, 32) der Kammer (82) mit einer unter einem bestimmten Druck stehenden Flüssigkeit,
- Mittel zur Messung (36$_i$) der Flüssigkeitsmenge, die die Kammer während eines Zeitabschnitts speist.

4. Vorrichtung gemäß Patentanspruch 3, dadurch gekennzeichnet, daß

- der längliche Körper (40) aus einem Körper (64) aus Elastomermaterial besteht, der auf einem Metallträger (60) befestigt ist, sowie dadurch, daß
- der Elastomerkörper (64) mit mindestens einer Längskehlung (70) versehen ist, die sich über eine Länge L zwischen den beiden längsgerichteten Stützflächen (66, 68) erstreckt, die voller Bestandteil des Elastomerkörpers (64) sind.

5. Vorrichtung gemäß Patentanspruch 4, dadurch gekennzeichnet, daß der Elastomerkörper (64) auf ein Metallprofil (60) mit U-förmigen Querschnitt geklebt ist.

6. Vorrichtung gemäß Patentanspruch 4, dadurch gekennzeichnet, daß der Körper aus Elastomermaterial (64) an einer zentralen Druckplatte (288) und zwei seitlichen Druckplatten (388, 389) befestigt ist.

7. Vorrichtung gemäß Patentanspruch 6, dadurch gekennzeichnet, daß

- die zentrale Druckplatte (288) mit mindestens einer Hauptdruckschraube (184) verbunden ist, und daß
- die beiden seitlichen Druckplatten (388, 389) jeweils mit mindestens einer Nebendruckschraube (395, 396) verbunden sind.

8. Vorrichtung gemäß Patentanspruch 7, dadurch gekennzeichnet, daß die beiden Nebendruckschrauben (395, 396) mit der zentralen Druckplatte (288) über einen durchgehenden T-Träger (372) dieser zentralen Druckplatte (288) verbunden sind.

9. Vorrichtung gemäß irgendeinem der Patentansprüche 4 bis 8, dadurch gekennzeichnet, daß eine Röhre (76) in die Auskehlung (70) zur axialen Verteilung der unter Druck stehenden Flüssigkeit eingelagert ist.

10. Vorrichtung gemäß irgendeinem der Patentansprüche 3 bis 5, dadurch gekennzeichnet, daß die Befestigungsmittel Bügel (85) umfassen, die quer über die beiden Spundbohlen (52, 54) aufgeschweißt sind, sowie längenverstellbare Stempel (84), die sich mit einem Ende auf den Bügeln (85) und mit dem anderen Ende auf dem länglichen Körper (40) abstützen.

11. Vorrichtung gemäß irgendeinem der Patentansprüche 3 bis 10, dadurch gekennzeichnet, daß die Befestigungsmittel eine Stützstruktur (100) umfassen, die mittels gehärteter Spitzen (110, 122) ausbaubar zwischen zwei gegenüberliegenden Oberflächen (102, 104) eines U-förmigen Abschnitts des Spundbohlenaufbaus eingepaßt ist, umfassen, sowie längenverstellbare Stempel (84), die sich mit einem Ende auf dieser Stützstruktur (100) und mit dem anderen Ende auf dem länglichen Körper (40) abstützen.

12. Vorrichtung gemäß irgendeinem der Patentansprüche 3 bis 11, dadurch gekennzeichnet, daß die Mittel zur axialen Abdichtung aus einer Dichtungsmasse bestehen, die an den beiden Enden (72, 74) des länglichen Körpers (40) in den Querschnitt der Fuge (50) zwischen die beiden Klauen (56, 58) eingespritzt wird.

13. Vorrichtung gemäß Patentanspruch 12, dadurch gekennzeichnet, daß die Einspritzmasse wasserschwellbar ist.

**Claims**

1. Process for quantitatively determining the degree of water-tightness of a sheet pile assembly containing at least one longitudinal joint (50) formed by a claw (56) integral with a first pile (52) which engages with a claw (58) integral with a second pile (54), characterised in that on one side of the assembly a tight chamber (82) of length L is delimited longitudinally above the joint (50), that this chamber (82) is supplied with a liquid, that the supply pressure of this liquid is held constant at at least one determined pressure p during an interval of time t, and that the quantity of liquid Q supplying the said chamber (82) during this interval of time t is measured.

2. Process according to claim 1, characterised in that the supply pressure of the liquid is successively held constant at rising pressures p1, p2, p3,... during intervals of t1, t2, t3,..., and that the quantities of liquid Q1, Q2, Q3, ... supplying the said chamber (82) during these intervals of time t1, t2, t3, ...., are measured.

3. Device for quantitatively determining the degree of water-tightness of a sheet pile assembly containing

8

at least one longitudinal joint (50) formed by a claw (56) integral with a first pile (52) which engages with a claw (58) integral with a second pile (54), characterised by an oblong body (40) provided with a first and with a second supporting surface (66, 68) which are elastically deformable and extend parallel in the longitudinal direction of the said oblong body (40), by means of attachment (85, 86) arranged so as to press the said oblong body (40) in a straddling position above the said longitudinal joint (50) on the two piles (52, 54), the said oblong body (40) providing above the joint (50) at least one measurement chamber (82) of length L, the first supporting surface (66) providing the longitudinal tightness between the first pile (52) and the oblong body (40), and the second supporting surface (68) providing the longitudinal tightness between the second pile (54) and the oblong body (40), by means of axially sealing the said chamber (82) at the level of the two ends (72, 74) of the oblong body (40), by means of supplying (10, 32) the said chamber (82) with a liquid at a given pressure, and by means of measuring (36i) the quantity of liquid supplied during a given interval of time.

4. Device according to claim 3, characterised in that the said oblong body (40) consists of a body of elastomer material (64) fixed to a metal support (60) and that the elastomer body (64) is provided with at least one longitudinal groove (70) extending for a length L between the two longitudinal supporting surfaces (66, 68) which are an integral part of a the body of elastomer material (64).

5. Device according to claim 4, characterised in that the body of elastomer material (64) is bonded to a metal section (60) of "U" shape.

6. Device according to claim 4, characterised in that the body of elastomer material (64) is fixed to a central plate (288) and to two side plates (388, 389).

7. Device according to claim 6, characterised in that the central plate (288) is joined to at least one main compression screw (184) and that the two side plates (388, 389), are each joined to at least one secondary compression screw (395, 396).

8. Device according to claim 7, characterised in that the two secondary compression screws (395, 396) are joined to the central plate (288) by means of a T section (372) integral with the said central plate (288).

9. Device according to any one of claims 4 to 8, characterised in that the groove (70) contains a tube (76) for the axial distribution of the said liquid under pressure.

10. Device according to any one of claims 3 to 5, characterised in that the means of attachment consist of stirrup-pieces (85) welded onto and straddling the two piles (52, 54) and of adjustable length stays (84) urging one end on the stirrup-pieces (85) and the other end on the oblong body (40).

11. Device according to any one of claims 3 to 10, characterised in that the means of attachment consist of a support structure (100) fitted in a removable manner with the aid of hardened tips (110, 122) between two opposite surfaces (102, 104) of a "U" section of the sheet piling assembly, and of adjustable length stays (84) urging one end on the said support structure (100) and the other end on the oblong body (40).

12. Device according to any one of claims 3 to 11, characterised in that the means of axial sealing consist of a sealing compound injected at the two ends (72, 74) of the oblong body (40) into the cross-section of the joint (50) between the two claws (56, 58).

13. Device according to claim 12, characterised in that the said injection compound expands in contact with water.

Fig. 1

Fig. 2

Fig. 3

Fig. 4

EP 0 574 773 B1

Fig. 5

Fig. 6